# EUROPÄISCHE PATENTANMELDUNG

(11) **EP 1 245 343 A2**
(43) Veröffentlichungstag der Anmeldung: **02.10.2002**
(21) Anmeldenummer: 02006355.8
(22) Anmeldetag: 21.03.2002
(51) Int. Cl.: B25H 1/00

(54) **Fernbedienbarer Werkzeugträger**

(30) Priorität: 26.03.2001 DE 10114905
(71) Anmelder: Forschungszentrum Jülich GmbH, 52425 Jülich (DE)
(72) Erfinder: Matela, Karel, 52379 Langewehe (DE)
(74) Vertreter: Jostarndt, Hans-Dieter

(57) **Zusammenfassung**

Die Erfindung betrifft ein Verfahren zum fernbedienbaren Einsatz unterschiedlicher Werkzeuge in schwer zugänglichen Bereichen und einen Werkzeugträger zur Durchführung des Verfahrens, wobei der Werkzeugträger durch folgende Merkmale gekennzeichnet ist:
- ein Werkzeughalter (20) ist um seine Längsachse drehbar mit einem Tragelement (10) verbunden und entlang dem Tragelement (10) bewegbar
- der Werkzeughalter (10) nimmt wenigstens ein Werkzeug auf, dass um eine Achse senkrecht zur Längsachse des Werkzeughalters drehbar ist, und
- das Tragelement (10) ist so eingerichtet, dass es senkrecht zur Bewegungsrichtung des Werkzeughalters (100) bewegbar ist.

Insbesondere eignet sich die Erfindung zum Bearbeiten von Bauteilen in Kernreaktoren.

## Beschreibung

Die Erfindung betrifft ein Verfahren zum fernbedienbaren Einsatz unterschiedlicher Werkzeuge in schwer zugänglichen Bereichen und einen Werkzeugträger zur Durchführung des Verfahrens. Insbesondere eignet sich die Erfindung zum Bearbeiten von Bauteilen in Kernreaktoren.

In verschiedenen technischen Einsatzgebieten besteht der Bedarf, Eingriffe und Montagearbeiten an schwer zugänglichen Orten vorzunehmen. Insbesondere bei Betrieb und Forschungseinsatz von Kernreaktoren ist es notwendig, radioaktive Bauteile der Tankeinbauten des Reaktors aus dem Reaktor zu entfernen. Dazu müssen beispielsweise Schrauben gelöst oder Bauteile zersägt werden. Die dazu verwendeten Werkzeuge müssen dabei auf Entfernungen von mehreren Metern im Wasser des Reaktors eingesetzt werden, wobei die Abmessungen im Reaktor sehr eng und die Bauteile von den Seiten des Reaktors nicht unmittelbar zugänglich sind.

Aufgabe der Erfindung ist es daher, ein Verfahren zum fernbedienbaren Einsatz unterschiedlicher Werkzeuge bereitzustellen. Insbesondere sollen die Werkzeuge in schwer zugänglichen Bereichen einsetzbar sein, wie sie beispielsweise durch Umgebungen mit engen Abmessungen und/oder große Entfernungen zum zu bearbeitenden Bauteil gegeben sind. Vorzugsweise liegt die Entfernung zum zu bearbeitenden Bauteil in der Größenordnung von einem oder mehreren Metern. Weiterhin ist es Aufgabe der Erfindung, eine Vorrichtung zur Durchführung des Verfahrens bereitzustellen.

Erfindungsgemäß wird diese Aufgabe dadurch gelöst, dass ein Werkzeughalter entlang einem Tragelement zu einem Einsatzort bewegt wird, wobei das Tragelement im Wesentlichen senkrecht zur Bewegungsrichtung zum Einsatzort bewegt wird und der Werkzeughalter wenigstens ein Werkzeug aufnimmt, das derartig um die Längsachse des Werkzeughalters und eine Achse senkrecht zur Längsachse des Werkzeughalters gedreht wird, dass es am Einsatzort auf das zu bearbeitende Bauteil ausgerichtet ist.

Weiterer Gegenstand der Erfindung ist ein fernbedienbarer Werkzeugträger zur Durchführung des Verfahrens. Der erfindungsgemäße Werkzeugträger zum Einsatz verschiedener Werkzeuge besteht aus einem Werkzeughalter, der im Wesentlichen senkrecht zu einem Tragelement steht, entlang dem er bewegbar ist, wobei der Werkzeughalter um seine Längsachse drehbar mit dem Tragelement verbunden ist und ein Werkzeug derartig aufnimmt, dass es um eine Achse senkrecht zur Längsachse des Werkzeughalters drehbar ist.

Insbesondere eignen sich das Verfahren und der Werkzeugträger zum Einsatz verschiedener Werkzeuge in schwer zugänglichen Bereichen, wie sie beispielsweise in Kernreaktoren gegeben sind.

In einer besonders bevorzugten Ausführungsform der Erfindung besteht das Tragelement des Werkzeugträgers aus einem Vierkant, neben dem sich zur Bewegung des Werkzeughalters eine Spindel erstreckt. Um das Gewicht des Tragelements möglichst gering zu halten, besitzt der Vierkant vorzugsweise ein Hohlprofil. Das Tragelement kann darüber hinaus aus anderen Bauteilen bestehen, welche die Funktion erfüllen, einen Werkzeughalter aufzunehmen und zu bewegen. Die Länge des Tragelements richtet sich nach den Entfernungen, über die das jeweilige Werkzeug bewegt werden soll. Vorzugsweise werden mit dem erfindungsgemäßen Werkzeugträger Werkzeuge auf Entfernungen von mehreren Metern bewegt, so dass das Tragelement dementsprechend lang ausgestaltet ist.

Die Spindel ist mit einem Ende des Vierkants verbunden. In einer besonders bevorzugten Ausführungsform der Erfindung ist dazu am Ende des Vierkants ein L-Profil mit einer Bohrung angebracht, in der die Spindel drehbar gelagert ist. Die Drehung der Spindel kann manuell oder motorgetrieben erfolgen.

Der Werkzeughalter kann in unterschiedlichen Formen ausgeführt sein, wobei es besonders zweckmäßig ist, ein Bauteil zu verwenden, das eine Gabel bildet, in das das jeweilige Werkzeug eingebracht werden kann. Beispielsweise können dazu drei zu einem U-Träger verschweißte Platten verwendet werden. Dieser gabelförmige U-Träger ist mit der Platte seiner geschlossenen Seite mit einem Gabelhalter verbunden, der wiederum mit einer Spindelmutter verbunden ist. Die Spindelmutter ist auf der Spindel angebracht. Der U-Träger ist um seine Längsachse drehbar mit dem Gabelhalter verbunden. Dies kann beispielsweise über eine Schraubverbindung mit Kontermutter erfolgen.

In einer besonders bevorzugten Ausführungsform der Erfindung liegen der im Wesentlichen plattenförmige Gabelhalter und eine Gegenplatte senkrecht auf gegenüberliegenden Seiten des Vierkants, wobei ein Teil des Gabelhalters so geformt ist, dass er mit der Gabelmutter verbunden werden kann, die senkrecht zur Spindel steht. Der Gabelhalter und die Gegenplatte sind so miteinander verbunden, dass sie sich nicht um den Vierkant drehen können, wenn der Gabelhalter über die Gabelmutter entlang dem Vierkant bewegt wird.

Zum Einbringen verschiedener Werkzeuge in den Werkzeughalter hat es sich als zweckmäßig erwiesen, dass die Kanten der Seitenteile des U-Trägers Vertiefungen aufweisen. Die Werkzeuge werden so zwischen den Seitenteilen des U-Trägers eingebracht, dass sie um eine Achse senkrecht zur Längsachse des Werkzeughalters drehbar sind. Sie besitzen dazu vorzugsweise Gegenelemente, die sich in die Vertiefungen des Werkzeughalters einfügen. Damit sich das Werkzeug leicht drehen lässt, hat es sich als zweckmäßig erwiesen, die Vertiefungen und die entsprechenden Gegenelemente abgerundet auszubilden.

Die vom Werkzeughalter aufgenommenen Werkzeuge und das Tragelement sind vorzugsweise mehrere Meter lang. Sollen nun Montagearbeiten in Umgebungen mit engen Abmessungen und auf große Entfernungen durchgeführt werden, wird das Tragelement mit dem Werkzeughalter und dem Werkzeug so positioniert, dass sich das Werkzeug in Nähe des zu bearbeitenden Bauteils befindet. Diese erste Annäherung an das Bauteil kann dadurch erfolgen, dass das Tragelement an einer Traverse angebracht ist, entlang der es im Wesentlichen horizontal bewegbar ist. Die Verbindung mit der Traverse erfolgt vorzugsweise über das L-Profil, mit dem die Spindel mit dem Vierkant verbunden ist.

Zur weiteren Justierung wird der Gabelhalter durch Drehung der Spindel so positioniert, dass das Werkzeug auf Höhe des zu bearbeitenden Bauteils liegt. Handelt es sich bei dem Bauteil beispielsweise um eine zu lösende Schraube, ist in den Werkzeughalter eine Schraubeinrichtung eingebracht. Die Schraubeinrichtung muss nun so ausgerichtet werden, dass ihr Schraubkopf genau in die Schraube eingreift. Dazu kann das Tragelement weiter entlang der Traverse und der Werkzeughalter entlang der Spindel bewegt werden, wobei das Werkzeug um die Längsachse des Werkzeughalters und eine Achse senkrecht zu dieser Achse gedreht werden kann. Dadurch sind alle erforderlichen Bewegungen zur genauen Justierung des Schraubkopfes möglich. Handelt es sich bei dem Werkzeug beispielsweise um eine Säge, kann deren Sägeblatt ebenfalls genau auf das zu zersägende Bauteil ausgerichtet werden.

Alle erforderlichen Bewegungen und Bedienungen des Werkzeugs können von einem Ende der vorzugsweise mehrere Meter langen Vorrichtung durchgeführt werden, ohne dass sich der Anwender unmittelbar in Nähe des zu bearbeitenden Teils aufhalten muss. So können beispielsweise radioaktive Bauteile im Wasser von tiefen Kernreaktoren mit engen Abmessungen bearbeitet werden.

Die Erfindung wird nachfolgend anhand von Zeichnungen näher erläutert:
**Fig.1** zeigt eine besonders bevorzugte Ausführungsform des Werkzeugträgers mit eingebrachter Schraubeinrichtung.
**Fig.2** zeigt eine Untersicht auf den erfindungsgemäßen Werkzeugträger.

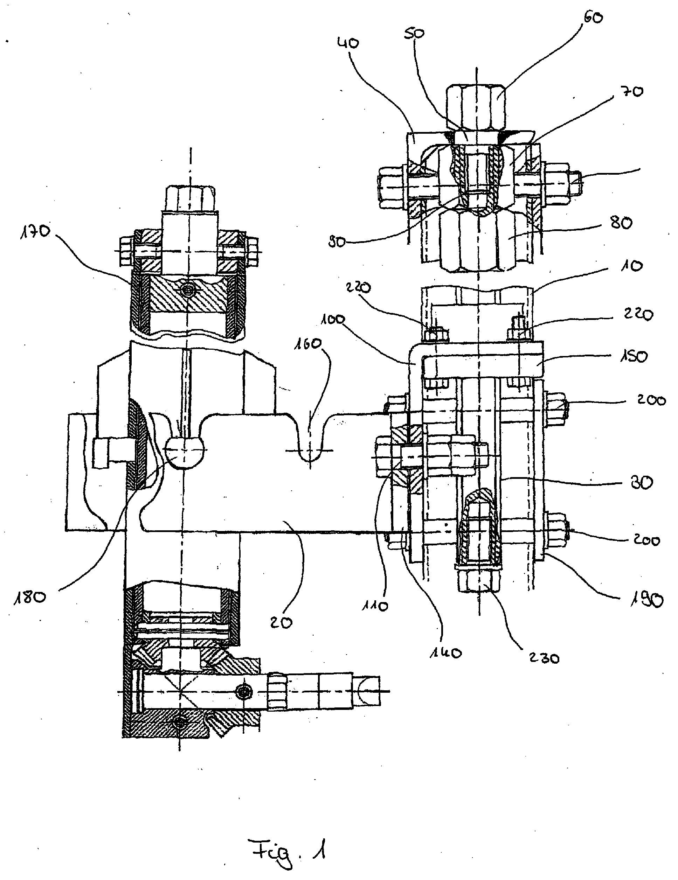

In **Fig.1** ist eine besonders bevorzugte Ausführungsform des Werkzeugträgers mit eingebrachter Schraubeinrichtung dargestellt. Der Werkzeugträger besteht im Wesentlichen aus einem Werkzeughalter 20, der entlang einem Tragelement 10 bewegbar ist. Das Tragelement 10 kann aus unterschiedlichen Bauteilen geformt sein. Damit bei möglichst geringem Gewicht eine hohe Stabilität erreicht wird, hat es sich als zweckmäßig erwiesen, das Tragelement aus einem Vierkant mit Hohlprofil zu bilden. Entlang dem Vierkant 10 verläuft eine Spindel 30, die an einem Ende drehbar mit dem Vierkant verbunden ist. Die Verbindung kann beispielsweise über ein L-Profil 40 erfolgen, das fest mit dem Vierkant 10 verbunden ist und auf einer Fläche des Profils eine Bohrung 50 aufweist, in welche die Spindel 30 eingebracht ist. Es ist vorteilhaft, die Spindel 30 so in die Bohrung 50 einzubringen, dass sie sich drehen kann, die axiale Bewegung dagegen eingeschränkt ist. In einer besonders bevorzugten Ausführungsform der Erfindung weist das Ende der Spindel dazu eine Mutter 60 auf, an der sich die Spindel manuell oder motorgetrieben drehen lässt. Die Mutter 60 liegt durch die Gewichtskraft der Spindel auf der oberen Seite des L-Profils 40 auf, wobei es von der unteren Seite durch eine weitere Mutter 70 und eine Kontermutter 80 gesichert ist. Die Mutter 60 kann über eine Verschraubung 90 mit der Spindel 30 verbunden sein.

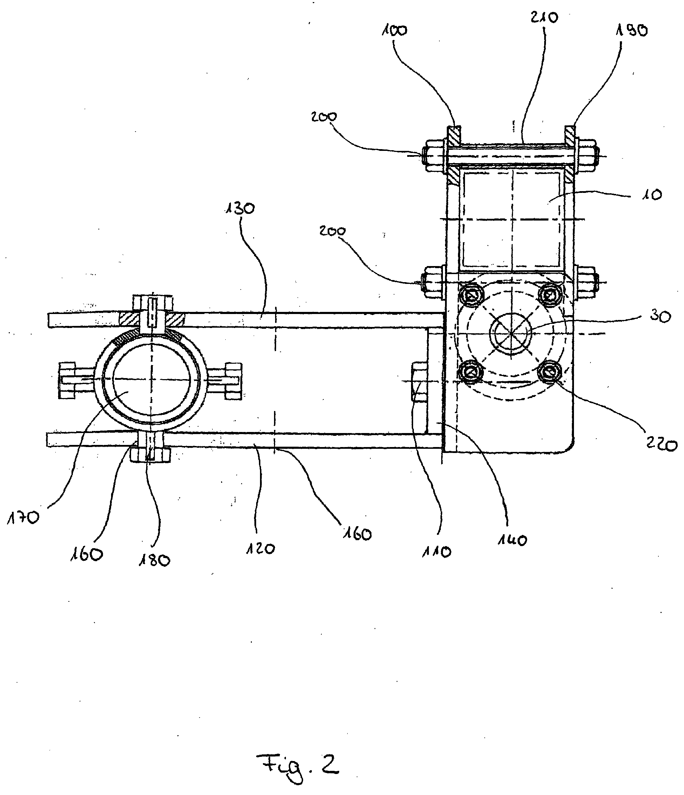

Der Werkzeughalter 20 kann in unterschiedlichen Formen ausgeführt sein, wobei es besonders zweckmäßig ist, ein Bauteil zu verwenden, das eine Gabel bildet, in das das jeweilige Werkzeug eingebracht werden kann. Beispielsweise können dazu drei zu einem U-Träger verschweißte Platten 120, 130 und 140 verwendet werden, wie es in **Fig.2** zu sehen ist. Dieser gabelförmige U-Träger 20 ist mit der Platte 140 seiner geschlossenen Seite mit einem Gabelhalter 100 verbunden.

Zur Aufnahme unterschiedlicher Werkzeuge weist der Werkzeughalter 20 an den Kanten seiner Seitenteile 120 und 130 Vertiefungen 160 auf, in die Gegenelemente der Werkzeuge einfügbar sind. In der Zeichnung ist dargestellt, wie eine Schraubeinrichtung 170 in den Werkzeughalter 20 eingebracht wird. Die Schraubeinrichtung 170 befindet sich dabei zwischen den Seitenteilen 120 und 130 des U-Trägers 20, wobei sich an der Schraubeinrichtung Gegenelemente 180 befinden, die in die Vertiefungen 160 eingreifen. Damit sich die Schraubeinrichtung 170 leicht über die Elemente 180 in den Vertiefungen 160 drehen lässt, ist es zweckmäßig, sowohl die Vertiefungen als auch die Gegenelemente abgerundet auszubilden. Die Werkzeuge sind auswechselbar, da sie nur in die Vertiefungen 160 eingehängt sind und sich leicht herausheben lassen.

Damit der Werkzeughalter 20 entlang dem Tragelement 10 bewegt werden kann, ist er in einer besonders bevorzugten Ausführungsform der Erfindung über einen Gabelhalter 100 mit dem Tragelement 10 und der Spindel 30 verbunden. Die Verbindung mit dem Gabelhalter 100 ist so ausgeführt, dass dieser um seine Längsachse drehbar ist. Dazu kann beispielsweise eine Schraubverbindung 110 mit Kontermutter verwendet werden.

In einer besonders bevorzugten Ausführungsform der Erfindung liegen der im Wesentlichen plattenförmige Gabelhalter 100 und eine Gegenplatte 190 senkrecht auf gegenüberliegenden Seiten des Vierkants 10, wobei ein Teil des Gabelhalters 100 so geformt ist, dass er mit der Gabelmutter 150 verbunden werden kann, die senkrecht zur Spindel 30 steht. Der Gabelhalter 100 und die Gegenplatte 190 sind so miteinander verbunden, dass sie sich nicht um den Vierkant 10 drehen können, wenn der Gabelhalter 100 über die Gabelmutter 150 entlang dem Vierkant 10 bewegt wird. In einer besonders bevorzugten Ausführungsform der Erfindung sind der Gabelhalter 100 und die Gegenplatte 190 über Schraubverbindungen 200 und Distanzringe 210 miteinander verbunden. Der Gabelhalter 100 ist über weitere Schraubverbindungen 220 mit der Spindelmutter 150 verbunden, die auf der Spindel 30 angebracht ist. Die Spindel 30 wird durch die Spindelmutter 150 und eine Bohrung im Gabelhalter 100 geführt. Damit sich die Spindelmutter 150 und der Gabelhalter 100 nicht nach unten von der Spindel 30 lösen können, weist die Spindel 30 am Ende ein Anschlagmittel auf. Als Anschlagmittel kann beispielsweise eine Schraube 230 dienen.

Die vom Werkzeughalter aufgenommenen Werkzeuge 170 und das Tragelement 10 sind vorzugsweise mehrere Meter lang. Sollen nun Arbeiten in Umgebungen mit engen Abmessungen und auf große Entfernungen durchgeführt werden, wird das Tragelement 10 mit dem Werkzeughalter 20 und dem Werkzeug 170 so positioniert, dass sich das Werkzeug in Nähe des zu bearbeitenden Bauteils befindet. Diese erste Annäherung an das Bauteil kann dadurch erfolgen, dass das Tragelement 10 an einer Traverse angebracht ist, entlang der es im Wesentlichen horizontal bewegbar ist. Die Verbindung mit der Traverse kann beispielsweise über das L-Profil 40 erfolgen.

Zur weiteren Justierung wird der Gabelhalter 100 durch Drehung der Spindel 30 so positioniert, dass das Werkzeug 170 auf Höhe des zu bearbeitenden Bauteils liegt. Handelt es sich bei dem Bauteil beispielsweise um eine zu lösende Schraube, ist in den Werkzeughalter 20 eine Schraubeinrichtung 170 eingebracht. Die Schraubeinrichtung muss nun so ausgerichtet werden, dass ihr Schraubkopf genau in die Schraube eingreift. Dazu kann das Tragelement 10 weiter entlang der Traverse und der Werkzeughalter 20 entlang der Spindel 30 bewegt werden, wobei das Werkzeug 170 um die Längsachse des Werkzeughalters 20 und eine Achse senkrecht zu dieser Achse gedreht werden kann. Dadurch sind alle erforderlichen Bewegungen zur genauen Justierung des Schraubkopfes möglich. Handelt es sich bei dem Werkzeug beispielsweise um eine Säge, kann deren Sägeblatt ebenfalls genau auf das zu zersägende Bauteil ausgerichtet werden.

## Patentansprüche

1. Verfahren zum Bearbeiten von Bauteilen in schwer zugänglichen Bereichen, **gekennzeichnet durch** die Kombination folgender Merkmale:
- ein Werkzeughalter (20), der um seine Längsachse drehbar mit einem Tragelement (10) verbunden ist, wird entlang dem Tragelement (10) zu einem Einsatzort bewegt,
- das Tragelement (10) wird senkrecht zur Bewegungsrichtung des Werkzeughalters (20) zu einem Einsatzort bewegt und
- der Werkzeughalter (20) nimmt wenigstens ein Werkzeug auf, welches derartig um die Längsachse des Werkzeughalters (20) und eine Achse senkrecht zur Längsachse des Werkzeughalters (20) gedreht wird, dass es am zu bearbeitenden Bauteil ausgerichtet wird.

2. Verfahren nach Anspruch 1, **dadurch gekennzeichnet, dass** die Bewegung des Gabelhalters (100) durch Drehung einer Spindel (30) erfolgt.

3. Verfahren nach Anspruch 2, **dadurch gekennzeichnet, dass** die Drehung der Spindel (30) manuell erfolgt.

4. Verfahren nach Anspruch 2, **dadurch gekennzeichnet, dass** die Drehung der Spindel (30) motorgetrieben erfolgt.

5. Verfahren nach einem oder mehreren der Ansprüche 1 bis 4,
**dadurch gekennzeichnet, dass** die Drehung des Werkzeughalters (20) und eines darin eingebrachten Werkzeugs (170) durch Bewegung des Werkzeugs (170) erfolgt.

6. Verfahren nach Anspruch 5, **dadurch gekennzeichnet, dass** die Bewegung des Werkzeugs (170) manuell erfolgt.

7. Verfahren nach Anspruch 5, **dadurch gekennzeichnet, dass** die Bewegung des Werkzeugs (170) motorgetrieben erfolgt.

8. Fernbedienbarer Werkzeugträger zur Einsatz verschiedener Werkzeuge in schwer zugänglichen Bereichen, **gekennzeichnet durch** die Kombination folgender Merkmale:
- ein Werkzeughalter (20) ist entlang einem Tragelement (10) bewegbar, mit dem er um seine Längsachse drehbar verbunden ist,
- der Werkzeughalter (10) nimmt wenigstens ein Werkzeug auf, das um eine Achse senkrecht zur Längsachse des Werkzeughalters drehbar ist, und
- das Tragelement (10) ist so eingerichtet, dass es senkrecht zur Bewegungsrichtung des Werkzeughalters (100) bewegbar ist.

9. Werkzeugträger nach Anspruch 8, **dadurch gekennzeichnet, dass** sich entlang dem Tragelement (10) eine Spindel (30) erstreckt, auf der sich eine Gabelmutter (150) befindet, die mit einem Gabelhalter (100) verbunden ist.

10. Werkzeugträger nach Anspruch 9, **dadurch gekennzeichnet, dass** der Werkzeughalter (20) um seine Längsachse drehbar mit dem Gabelhalter (100) verbunden ist.

11. Werkzeugträger nach einem oder mehreren der Ansprüche 8 bis 10, **dadurch gekennzeichnet, dass** der Werkzeughalter (20) gabelförmig ist.

12. Werkzeugträger nach einem oder mehreren der Ansprüche 8 bis 11, **dadurch gekennzeichnet, dass** der Werkzeughalter (20) Mittel aufweist, an denen ein Werkzeug (170) bewegbar angebracht werden kann.

13. Werkzeugträger nach einem oder beiden der Ansprüche 11 und 12, **dadurch gekennzeichnet, dass** der Werkzeughalter (20) ein U-Träger ist und an den Seitenteilen (120) und (130) Vertiefungen (160) aufweist, in die entsprechende Gegenelemente (180) eines Werkzeugs (170) eingreifen können.

14. Werkzeugträger nach einem oder mehreren der Ansprüche 9 bis 13, **dadurch gekennzeichnet, dass** die Spindel (30) drehbar mit dem Tragelement (10) verbunden ist.

15. Werkzeugträger nach einem oder mehreren der Ansprüche 8 bis 14, **dadurch gekennzeichnet, dass** das Tragelement (10) ein Vierkant mit Hohlprofil ist.

16. Werkzeugträger nach einem oder mehreren der Ansprüche 9 bis 15, **dadurch gekennzeichnet, dass** die Spindel (30) in die Bohrung (50) eines Bauteils (40) eingebracht ist, welches fest mit dem Vierkant (10) verbunden ist.

17. Werkzeugträger nach Anspruch 16, **dadurch gekennzeichnet, dass** das Bauteil (40) ein L-Profil ist, dass mit dem Vierkant (10) verschraubt ist.

18. Werkzeugträger nach einem oder mehreren der Ansprüche 9 bis 17, **dadurch gekennzeichnet, dass** ein Ende der Spindel (30) fest mit einer Mutter (60) verbunden ist, mittels der die Spindel gedreht werden kann.

19. Werkzeugträger nach Anspruch 18, **dadurch gekennzeichnet, dass** die Drehung der Spindel (30) manuell erfolgt.

20. Werkzeugträger nach Anspruch 18, **dadurch gekennzeichnet, dass** die Drehung der Spindel (30) motorgetrieben erfolgt.

21. Werkzeugträger nach einem oder mehreren der Ansprüche 18 bis 20, **dadurch gekennzeichnet, dass** die Mutter (60) der Spindel (30) auf dem L-Profil (40) aufliegt, während die Spindel (30) auf der von der Mutter (60) abgewandten Seite durch eine Mutter (70) mit Kontermutter (80) gesichert ist.

22. Werkzeugträger nach einem oder mehreren der Ansprüche 9 bis 21, **dadurch gekennzeichnet, dass** der Gabelhalter (20) im Wesentlichen plattenförmig ist und ein Teil des Gabelhalters (20) so geformt ist, dass er mit einer Gabelmutter (150) verbunden ist, die auf eine Spindel (30) aufgebracht ist.

23. Werkzeugträger nach einem oder mehreren der Ansprüche 9 bis 22, **dadurch gekennzeichnet, dass** der Gabelhalter (100) und eine Gegenplatte (190) auf zwei gegenüberliegenden Seiten des Tragelements (10) liegen und so miteinander verbunden sind, dass sie entlang dem Tragelement bewegbar sind, ohne dass sie sich um das Tragelement (10) drehen können.

24. Werkzeugträger nach Anspruch 23, **dadurch gekennzeichnet, dass** der Gabelhalter (100) und die Gegenplatte (190) über wenigstens zwei Schraubverbindungen (200) mit Distanzring (210) verbunden sind.

25. Werkzeugträger nach einem oder mehreren der Ansprüche 9 bis 24, **dadurch gekennzeichnet, dass** der plattenförmige Gabelhalter (100) im Wesentlichen senkrecht am Tragelement (10) anliegt und der Teil des Gabelhalters (100), der neben dem Tragelement (10) liegt, gebogen ist und über wenigstens eine Schraubverbindung (220) mit der Gabelmutter (150) verbunden ist.

26. Werkzeugträger nach einem oder mehreren der Ansprüche 9 bis 25, **dadurch gekennzeichnet, dass** der Werkzeughalter (20) über eine Schraubverbindung (110) mit Kontermutter drehbar mit dem Gabelhalter (100) verbunden ist.

27. Werkzeugträger nach einem oder mehreren der Ansprüche 9 bis 26, **dadurch gekennzeichnet, dass** das Tragelement (10) im Wesentlichen senkrecht zur Bewegungsrichtung des Gabelhalters (100) bewegbar ist.

28. Werkzeugträger nach Anspruch 27, **dadurch gekennzeichnet, dass** das Tragelement (10) bewegbar mit einer im Wesentlichen horizontal verlaufenden Traverse verbunden ist.

29. Werkzeugträger nach Anspruch 28, **dadurch gekennzeichnet, dass** das Tragelement (10) über das L-Profil (40) mit der Traverse verbunden ist.

30. Werkzeugträger nach einem oder mehreren der Ansprüche 8 bis 29, dass ein Werkzeug (170) derartig mit dem Werkzeughalter (20) verbunden ist, dass eine Bewegung des Werkzeugs (170) auf den Werkzeughalter übertragen wird und das Werkzeug derartig um die Längsachse des Werkzeughalters und eine Achse senkrecht zu dieser Längsachse drehbar ist, dass es an einem zu bearbeitenden Bauteil ausgerichtet werden kann.

31. Werkzeugträger nach einem oder mehreren der Ansprüche 9 bis 30, **dadurch gekennzeichnet, dass** das Tragelement (10) und die Spindel (30) über einen Meter lang sind.

32. Werkzeugträger nach einem oder mehreren der Ansprüche 8 bis 31, **dadurch gekennzeichnet, dass** ein Werkzeug (170) in den Werkzeughalter (20) eingebracht ist.

33. Werkzeugträger nach Anspruch 32, **dadurch gekennzeichnet, dass** das Werkzeug (170) eine Schraubeinrichtung ist.

34. Werkzeugträger nach einem oder beiden der Ansprüche 32 und 33, **dadurch gekennzeichnet, dass** das Werkzeug (170) über Gegenelemente (180) in die Vertiefungen (160) des Werkzeughalters (20) eingehängt ist.

35. Werkzeugträger nach einem oder mehreren der Ansprüche 32 bis 34, **dadurch gekennzeichnet, dass** das Werkzeug (170) derartig ausgebildet und mit dem Werkzeughalter verbunden ist, dass seine Bewegung auf den Werkzeughalter übertragen wird.

36. Werkzeugträger nach einem oder mehreren der Ansprüche 32 bis 35, **dadurch gekennzeichnet, dass** die Länge des Werkzeugs (170) im Wesentlichen der Länge des Tragelements (10) entspricht.
